# EUROPEAN PATENT APPLICATION

(11) **EP 2 543 467 A1**
(43) Date of publication of application: **09.01.2013**
(21) Application number: 11009897.7
(22) Date of filing: 19.04.2006
(51) Int. Cl.: B23K 26/42, F01D 5/00, B23P 6/04

(54) **Method of welding a gamma-prime precipitate strengthened material**

(30) Priority: 19.04.2005 US 109317
(62) Divisional of application: 06750598.2
(71) Applicant: Rolls-Royce Corporation, Indianapolis IN 46206 (US)
(72) Inventor: Fuesting, Timothy Paul, Thorntown IN 46071 (US)
(74) Representative: Holmes, Matthew Peter

(57) **Abstract**

A method for welding a gamma-prime precipitation strengthened alloy component. In one aspect the welding process includes preheating the alloy component (10) to minimize the difference in contraction between the weld deposit (24) and the substrate portion (22) of the component during solidification and cooling. The component having a weld that is substantially free of cracking.

## Description

### FIELD OF THE INVENTION

The present invention relates generally to a method for welding a component formed of a gamma-prime precipitation strengthened alloy. More specifically in one form the present application relates to a method of welding a gamma- prime precipitation strengthened alloy component wherein the weld is free of cracks. While the present application was developed for welding gas turbine engine components, it also has application in welding components from many other areas of technology.

### BACKGROUND OF THE INVENTION

Modem gas turbine engines operate at high rotational speeds and high temperatures for increased performance and efficiency. Therefore the materials from which gas turbine engine components are fabricated must be able to withstand the severe operating environment.

Many gas turbine engine components are manufactured from high strength superalloys which are specifically developed for high temperature and high stress applications. Often these superalloys are designed to be principally strengthened through a controlled heat treatment process which produces gamma-prime precipitates. This precipitation strengthening phenomena and the associated changes that occur upon aging makes welding of components formed of these superalloys very difficult.

The present application provides novel and unobvious methods for welding gamma-prime precipitation strengthened alloy components.

### SUMMARY OF THE INVENTION

One form of the present invention contemplates a method for welding an article formed of a gamma-prime precipitation strengthened alloy, comprising:
heating a portion of the article to a temperature within a range from about 600°F to and including the aging temperature of the alloy, the portion including a weld area;
welding at least a portion of the weld area after the heating to produce a weld deposit;
and, cooling the article to form a weld that is free of solidification cracking.

The method may further include subjecting the article to a heat treatment act after said welding, and wherein the weld is free of strain age cracking after said heat treatment.

Preferably said heating does not substantially change the microstructure of the article.

Preferably said heating only heats a portion of the article, and said heating is not isothermal.

Said heating may be accomplished by controlling a laser beam; and said welding may be accomplished by controlling the laser beam.

Said welding may be a single layer process.

Alternatively, said welding may be a multi-layer process.

The method may include adding additional material during said welding to produce the weld deposit. Said adding the additional material may for instance be a gamma-prime precipitation strengthened alloy.

The method may further include subjecting the article to a heat treatment act after said welding; wherein the weld is free of any strain age cracking after said heat treatment; wherein said heating does not substantially change the microstructure of the article; wherein said heating only heats a portion of the article, and said heating is not isothermal; and wherein the alloy is a Ni based super alloy.

In some embodiments said heating is accomplished by a laser beam; and wherein said welding is accomplished with the laser beam.

Another form of the present invention contemplates a method for welding a gamma-prime precipitation strengthened alloy component, comprising: heating only a portion of the component to a temperature below the stress relief temperature for the gamma-prime precipitation strengthened alloy, the portion including a weld area and a substrate portion located below the weld area, the heating expanding the substrate portion; welding at least a portion of the weld area after the heating to produce a weld deposit; and cooling the weld area, wherein the difference in contraction between the weld deposit and the substrate portion does not cause solidification cracking.

Said heating may be within a range from about 600°F to below the stress relief temperature for the gamma-prime precipitation strengthened alloy.

Said heating may include controlling one of a scanning laser beam and a scanning electron beam.

Said heating may be accomplished by controlling a scanning laser beam, and wherein said welding is accomplished with the laser beam.

The method may further include subjecting the article to a heat treating act after said welding, and wherein the weld is uncompromised by strain age cracking after said heat treating.

In some embodiments said heating does not substantially change the microstructure of the article.

In some embodiments said heating is a dynamic act and the component temperature is non-uniform; wherein the article includes at least one defect area; and which further includes machining the at least one defect area to define the weld area.

In some embodiments aid heating is within a range from about 600°F to below the stress relief temperature for the gamma-prime precipitation strengthened alloy, wherein said heating is accomplished by controlling a scanning laser beam; wherein said welding is accomplished with the laser beam; which further includes subjecting the article to a heat treating act after said welding, and wherein the weld is uncompromised by strain age cracking after said heat treating; and wherein said heating does not substantially change the microstructure of the article.

Yet another form of the present invention contemplates a method for welding an article formed of a gamma-prime precipitation strengthened alloy, comprising: preparing a weld area in the article; dynamically heating only a portion of the article to a preheat temperature within a range from about 600°F to and including the aging temperature of the alloy, the portion including the weld area; welding upon the weld area after the heating to produce a weld deposit; solidifying the weld deposit to form a weld that is uncompromised by solidification cracking; and, heat treating the article after the solidifying, the weld after the heat treating is uncompromised by strain age cracking.

Said beating may be accomplished by controlling a scanning laser beam, and said welding may be accomplished with the laser beam.

These and other objects of the present invention will become more apparent from the following description of the illustrative embodiment.

### BRIEF DESCRIPTION OF THE DRAWINGS

Fig. 1 is a perspective view of one embodiment of an illustrative gas turbine engine blade.
Fig. 2 is a schematic illustration of one non-limiting embodiment of a welding apparatus.
Fig. 3 is an enlarged view of a portion of a component having a defect.
Fig. 4 is an enlarged illustrative view of the portion of the component in Fig. 3 after a machining operation.
Fig. 5 is an illustrative view of the component in Fig. 4 after being pre-heated and welded.
Fig. 6 is an illustrative view of the component in Fig.5 after the weld has solidified and the substrate has cooled.
Fig. 7 is an illustrative plan view of a weld deposit.
Fig. 8 is a block diagram illustrating one form of a welding process of the present application.

### DESCRIPTION OF THE ILLUSTRATIVE EMBODIMENTS

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention is illustrated therein being contemplated as would normally occur to one skilled in the art to which the invention relates.

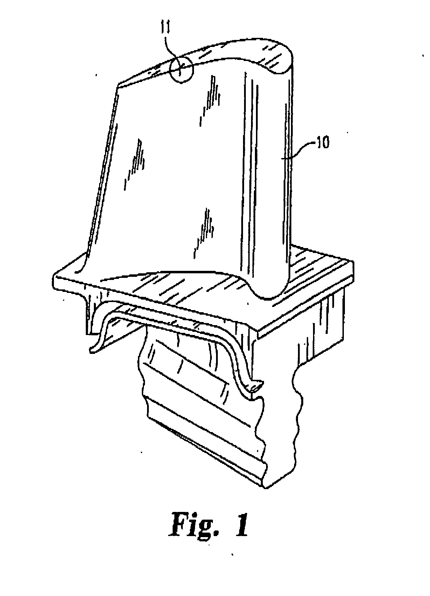

With reference to Fig. 1 , there is illustrated a non-limiting view of a component or article 10. In one form, the component or article 10 is a gas turbine engine component, such as a turbine blade. The present application contemplates a very broad definition for the terms component or article and is not limited to gas turbine components unless specifically stated. The illustrative embodiment will be described with reference to a gas turbine engine blade; however it should be understood by one of ordinary skill in the art that the present application is not limited to gas turbine engine components.

The component or article 10 can be, but is not limited to, a fabricated structure, a cast structure and/or a forged structure. In one form, the component or article 10 is a cast structure produced by casting operations believed generally known to those of ordinary skill in the art. The cast component or article 10 can be, a unitary casting or can be a plurality of cast pieces that are assembled into the component or article. In an alternative embodiment; the component or article 10 is fabricated by joining multiple components together by welding and/or other assembly techniques such as, but not limited to, brazing, bi-casting, diffusion bonding and other mechanical fastening methods known to one of ordinary skill in the art.

The component or article 10 is formed from various types of nickel, titanium and cobalt superalloy compositions. However, other types of alloys and superalloys are contemplated herein. In a preferred form, the superalloy compositions of interest are from a class of materials that utilize gamma-prime precipitation strengthening. Gamma-prime precipitation strengthened materials are generally recognized as being difficult to weld and are noted for crack formation associated with the welding and/or post welding heat treatment processes. The present application contemplates that the terms weld or welding include cladding, welding and/or direct laser deposition. Cracking of these types of materials results from two different sources that are associated with the overall gamma-prime content of the alloy. The two different sources are classified as solidification cracking and strain age cracking. Solidification cracking is generally caused by a combination of hot shortness and/or residual stress from solidification. The present application recognizes that the residual stress from solidification is a direct result of thermal growth or contraction differences of the substrate material of the component and the weld deposit.

Strain age cracking manifests itself during the post weld deposit heat treating of the gamma-prime strengthened alloys, wherein the alloy has at least 30% by volume gamma-prime content. When the gamma-prime precipitates there is a net volume contraction or reduction that is due to the increased ordering or atomic stacking associated with the gamma-prime phase precipitation. This contraction further increases the residual stress in the component to the point that the ultimate stress level is reached and cracking occurs. The issue is more pronounced in single crystal alloys because these materials usually contain about 60% to over 70% volume gamma-prime.

One preferred group of gamma-prime precipitation strengthened materials are nickel based superalloys such as, but not limited to, those known by the following trade names: INCO 713, MARM 247, INCO 738, MARM 002, CMSX-3, CMSX- 4 and CMSX-10. As set forth above, the present inventions are not intended to be limited to the above materials and contemplate utilization with almost any alloy or superalloy material.

The component or article 10 may be formed with a microstructure that is one of equiaxed, dendritic, directionally solidified, or of a single crystal configuration. Details regarding general techniques for producing a cast component with each of the above microstructures are believed generally known. One technique for producing a cast component is set forth in United States Patent No. 5,295,530 to O'Conner which is incorporated herein by reference. The present application is not limited to cast structures and when cast structures are contemplated they are not limited to cast structure produced by the techniques set forth in United States Patent No. 5,295,530 to O'Conner.

The component or article 10 is illustrated in Fig. 1, with a defect 11. In one form of the present application, the defect 11 is classified as a crack. However, the present application contemplates that the defect may take on any of a variety of configurations, including but not limited to corrosion, erosion, oxidation, mechanical abrasion or other types of surface disturbance. In another form of the present application, the area of interest on the component to be welded is in need of a coating/cladding and there is not a "defect" such as set forth by feature number 11. The present application is applicable to welding an area including a defect and/or welding a layer or layers on a portion of the component in an area that is substantially free of defects.

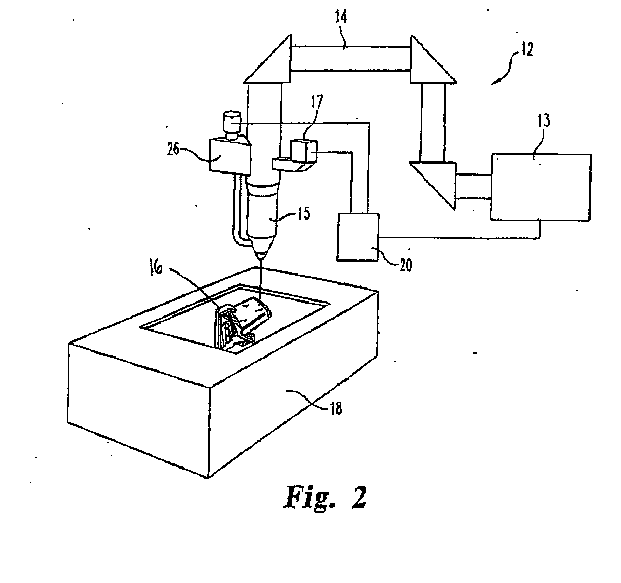

With reference to Fig. 2, there is illustrated one non-limiting example of a welding system 12 for welding the component 10. The illustrative view of the welding system 12 is a non-limiting example of the type of welding system that can be utilized to obtain the desired weld to repair defect 11 and/or provide a coating or cladding thereon. The illustrated welding system 12 includes a laser 13, an enclosed beam delivery path 14, laser focusing optics 15, a component fixturing and positioning system 16, a visualization system 17 for component location and laser path control and a pre-heating chamber 18. The welding system 12 may also include a powder feed and/or wire feed system 26 for delivering additional welding material to the welding area on the component 10. The operation and coordination of the individual components comprising the welding system 12 are controlled through a computerized system controller 20. In one form, the welding system 12 includes a shielding gas flow delivery system to deliver the shielding gas to the pre-heating chamber and enable the preheating and/or welding to occur under the shielding gas. One type of shielding gas commonly used in welding operations is Argon. The illustrated welding system 12 is purely illustrative and other welding systems are contemplated herein. While the welding system has been described in one form with reference to a laser it is understood that other welding systems utilizing electron beam, plasma welding, gas tungsten are welding, multiple energy sources and combinations thereof are contemplated herein.

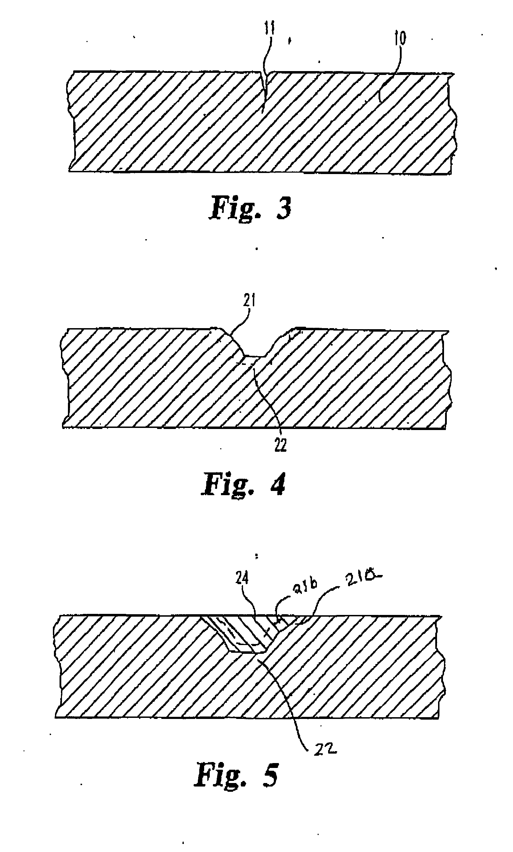

With reference to Figs. 3-6, there is set forth an illustrative view of a portion of the component or article 10 with the defect 11 that is desired to be repaired by welding. In one form of the present application, the defect 11 is machined to produce a weld area 21; however the present application also contemplates the direct welding of the defect 11 without concern for any pre-welding machining. In one form of the present application, the weld area 21 is formed in the component or article 10 by a machining process including, but not limited to grinding, milling, electro discharge machining, hand blending and/or rotary filing. The present application will use the term weld area 21 to refer to the area to be welded on the component or article 10 whether or not it has been machined prior to welding.

With reference to Fig. 4, there is depicted an illustrative view of the component or article 10 where the weld area 10 has been machined. The weld area 21 has a substrate portion 22 located under and/or around the weld area 21. The substrate portion 22 is a part of the component 10. In repairing the defect 11 or forming a cladding on at least a portion of the component 10 the present operation heats the substrate portion 22 around the weld area 21. Preheating of the substrate portion 22 around the weld area 21 causes the substrate portion 22 to expand from its normal ambient state condition.

With reference to Fig. 5, there is illustrated that the substrate portion 22 has expanded from its ambient state condition indicated by phantom line 21 b to an expanded condition indicated by line 21 a. This figure is purely illustrative and is set forth herein to aid the reader in understanding that -the localized pre-heating causes the substrate portion 22 around the weld area 21 to expand. The non-solidified weld deposit 24 is formed on the weld area 21 and is connected with the substrate portion 22. In the illustrative view set forth in Fig. 5, the non-solidified weld deposit 24 and the substrate portion. 22 proximate the weld area 21 have not been cooled to the extent where contraction of the materials has occurred.

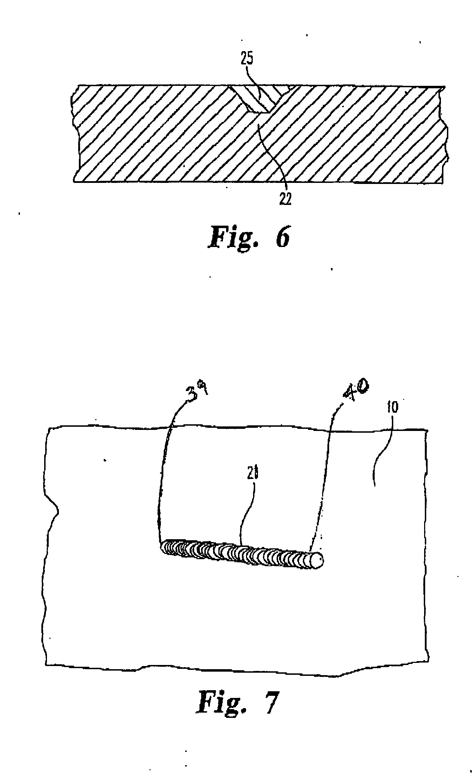

With reference to Fig. 6, there is an illustrated a sectional view representing that the weld deposit 24 has solidifies into weld 25 within the weld area 21. As set forth in Fig. 6, the weld deposit 24 upon solidifying into weld 25 and the substrate portion 22 have contracted as they cool. The resulting weld 25 is uncompromised, and in one form is free of cracks associated with solidification cracking. With reference to Fig. 7, there is illustrated a plan view of the weld 25 formed on the article or component 10.

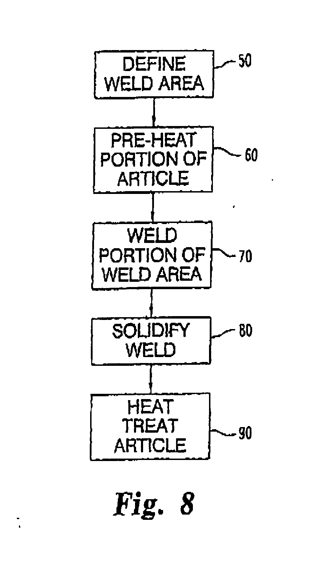

With reference to Fig. 8, there is set forth a block diagram illustrating one form of a welding process for producing a weld 25 uncompromised by cracks due to solidification cracking and/or strain age cracking. In one form, the weld is free of cracks due to solidification cracking and/or strain age cracking. The weld is formed by melting the substrate 22 around the weld area 21 and may include the addition of additional welding material. The additional welding material may be added during the welding process in material forms such as, but not limited to, wire, powder, integral filler and/or filler material overlay. The additional welding material may be of the same type of alloy material as the substrate 22 or may be a different type of material. In one aspect the present application contemplates that the additional welding material is a gamma-prime precipitation strengthened alloy, and in another aspect is a gamma-prime precipitation strengthened alloy of the same material as the substrate 22. However, additional welding materials of other types of alloys and superalloys are contemplated herein.

The component or article 10 is inspected and the weld area 21 is determined and defined for subsequent acts in the welding process. The weld area 21 is then prepared for the welding operation. The preparation may include cleaning and/or machining of the weld area as is determined to be necessary based upon a review of the defect 11. The block diagram describing the welding process defines the weld area in block 50. After the weld area 21 has been determined and prepared as necessary at least a portion of the component is subjected to a preheating act 60. In one form of the present application, the component or article 10 is arranged on a supporting fixture 16 (Fig. 2) located within the preheating chamber 18. However, the present application also contemplates that the component or article 10 may not be placed in a supporting fixture and merely rests on a floor member within the preheating chamber 18. The pre-heating chamber 18 may be filled with a shielding gas, such as, but not limited to, Argon.

The preheating of the component or article 10 is done by means such as, but not limited to, inductive, electron beam, laser, and focused lamps. In one embodiment, the heating of the portion of the substrate 22 of the component or article 10 around the weld area 21 is accomplished by controlling one of a scanning laser beam and a scanning electron beam, A preferred form of the preheating process controls a laser beam to cause the heating of the substrate 22 around the weld area 21. In one form, the preheating act 60 is a dynamic process that functions to substantially preheat only a portion of the component or article 10 prior to the welding act 70. However, in another form, the present application contemplates heating the entire component or article 10. The preheating act 60 upon heating only a portion of the component or article 10 creates a non-uniform preheated temperature. The localized preheating of the substrate 22 around the weld area 21 is maintained at a temperature that does not cause a substantial change in the microstructure of the component or article 10. Examples of the type of microstructure characteristics that do not change may include carbide morphology changes, gamma-prime morphology change, TCP precipitation.

The present application contemplates that the preheating of the component may utilize the movement of the laser beam or electron beam across the surface to be heated at a constant or non-constant speed. In one form the non-constant traverse speed is ramped from an initial speed up to the desired speed and then may be ramped back down. In a preferred form the traverse speed of the laser or electron beam across the surface is constant.

In one form of the present application, the degree of heating in the preheating act 60 of the weld area 21 and the substrate portion 22 will be kept below the stress relief temperature for the gamma-prime precipitation strengthened alloy. In another form, the degree of heating in the preheating act 60 will be within a range of about 600°F to below the stress relief temperature for the gamma-prime precipitation strengthened alloy. In yet another form, the degree of heating in the preheating act 60 will be within a range of about 800°F to below the stress relief temperature for the gamma-prime precipitation strengthened alloy. Preheating below the stress relief temperature ensures that any dimensional changes in the component are minimal.

The preheating act 60 further contemplates controlling the heating of the component or article 10 prior to welding to temperatures to and including the aging temperature of the gamma-prime precipitation strengthened alloy. In one form, the preheating act 60 controls the heating to a temperature within a range from about 600°F to and including the aging temperature of the gamma-prime precipitation strengthened alloy. In yet another form the preheating act 60 controls the heating to a temperature within a range from about 800°F to and including the aging temperature of the gamma-prime precipitation strengthened alloy. The aging temperature will be generally defined as the temperature region where the precipitates continue to grow after coming out of solution in the alloy.

The preheating act 60 raises the temperature of at least a portion of the component or article 10 to a desired temperature prior to the welding act 70. By preheating the substrate portion 22 around the weld area this area expands as set forth with reference to Fig 5. The temperature obtained in the weld area 21 and substrate 22 by the preheating act 60 is contemplated herein as not having to be uniform and/or equal across the weld area 21. However, the present application also contemplates that in one embodiment the preheating act 60 creates a substantially uniform temperature within the weld area 21.

Welding act 70 follows the preheating act 60 and functions to melt at least part of the substrate portion 22 around the weld area 21 to form the weld 25. The welding act 70 is preferably occurring under a shielding gas, such as Argon. The welding act 70 may include the introduction of additional welding material or may rely solely upon repairing the defect 11 by the melting of the substrate 22 around the weld area 21. The welding of the weld area 21 with the substrate material 22 will allow the repaired area to have substantially equivalent oxidation resistance properties as the original material of the component or article. The welding act 70 produces a non-solidified weld deposit 24 as shown in Fig. 5, However, as a person of ordinary skill in the art will appreciate the weld deposit promptly solidifies just behind the weld front. The welding act 70 may be a single pass or multi-pass operation and may utilize the depositing of a single weld deposit layer or multiple weld deposit layers. Further, the present application contemplates that there may be multiple weld deposits that are deposited adjacent one another to cover or repair a portion of the component or article 10.

In one form the welding act is accomplished by controlling a scanning laser beam or scanning electron beam as it moves over the surface to be welded. The traverse speed of the laser beam or electron beam as it is moved over the weld area may be constant or variable. In utilizing the term variable there is contemplated that the speed is ramped up and/or down from an initial speed to a desired speed. In a preferred form-the traverse speed of the laser beam or electron beam is ramped up and down to accommodate the geometry of the component or article being welded. Further, the present application contemplates that the power may also be constant or varied over the weld area. In a preferred form the power is ramped up or down from an initial setting or current setting depending upon the geometry of the component and/or weld area and the portion being welded. With reference to Fig. 7 the weld is being deposited from right to left. In one example a region 39 of the weld area 21 would be a region wherein the traverse speed of the laser beam or electron beam may be ramped up and the power may be ramped down. In contrast a region 40 would be a region wherein the traverse speed of the laser beam or electron beam may be ramped down and the power is ramped up. The present application contemplates a wide variety of potential changes in traverse speed and power to meet the energy requirements for welding the component or article.

With reference to act 80, there is illustrated the solidification of the weld deposit 24 into the weld 25. The weld deposit 24 and the surrounding substrate 22 are cooled to allow solidification into a weld 25. As discussed above the weld deposit solidifies just behind the weld front. As the weld deposit 24 and the surrounding substrate 22 cool they contract. The degree of contraction of the weld deposit 24 and the degree of contraction of the substrate 22 have a difference, but it is small enough that there is not caused any weld cracking due to the solidification. In one form the resulting weld 25 is free of solidification cracking.

The present application contemplates that after the solidification act 80, the article or component 10 with weld 25 may be subjected to a controlled thermal process to vary the microstructure of the weld. In one form the microstructures contemplated herein include polycrystalline, dendritic, directionally solidified or single crystal.

With reference to act 90, there is illustrated a post welding act heat treatment process. Typically, the weld 25 is thermally cycled in act 90 prior to a non-destructive inspection operation. The thermal cycling process: will open up any tight cracks so that they may be identified by the non-destructive inspection operation; induce strain age cracking if it is going to occur such that the non-destructive inspection operation can identify it; and provide some degree of stress relief such that no additional cracking will occur during subsequent thermal exposures. Weld 25 in the present application is uncompromised and in one form is free of strain age cracking.

One non-limiting example of parameters utilized in a system to repair a component will be described with reference to a gas turbine engine blade formed of In 713 material. The defect in the blade was repaired in a welding system including a 500 watt YAG fiber delivered laser. The blade was preheated by scanning the weld area with the laser beam. The parameters associated with the laser during the preheating were: focal + 0.78 inches from the surface; beam size on blade about 0.020 inches; scanning pattern was a linear sweep performed fifty-six times at a speed of about fourteen inches per minute; and the power was 85 watts. During the preheating operation the preheating chamber was flooded with an inert gas, Argon. During preheating the power and traverse speed were constant.

The welding repair of the blade was performed following the preheating within the preheating chamber. During the welding operation additional welding material, In 713, was delivered at a rate of 0.025 grams per second. The welding was performed under a shielding flow of the Argon gas delivered at a rate of about fifty cubic feet per hour. The parameters associated with the laser during the welding were: focal 0.0 from the surface; beam size on blade at weld area about 0.010 - 0.020 inches, scanning pattern was a square stitch at a speed of seven to twelve inches per minute; and the power was in the range of 100 to 150 watts. The resulting weld was free of defects. During the welding act the speed of the laser beam traversing the surface was ramped up and down within the above speed range and the powere was ramped up and down within the above power range.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A method for welding a gamma-prime precipitation strengthened alloy component, comprising:
heating only a portion of the component (10) to a temperature below the stress relief temperature for the gamma-prime precipitation strengthened alloy, the portion including a weld area (21) and a substrate portion (22) located below the weld area, said heating expanding the substrate portion;
welding at least a portion of the weld area (21) after said heating to produce a weld deposit (24); and
cooling the weld area (21), wherein the difference in contraction between the weld deposit (24) and the substrate portion (22) does not cause solidification cracking.

2. The method of claim 1, wherein said heating is within a range from about 316°C (600 ° F) to below the stress relief temperature for the gamma-prime precipitation strengthened alloy.

3. The method of claim 1 or 2, wherein said heating includes controlling one of a scanning laser beam and a scanning electron beam.

4. The method of claim 1 or 2, wherein said heating is accomplished by controlling a scanning laser beam, and wherein said welding is accomplished with the laser beam.

5. The method of any preceding claim, which further includes subjecting the article (10) to a heat treating act after said welding, and wherein the weld (25) is uncompromised by strain age cracking after said heat treating.

6. The method of any preceding claim, wherein said heating does not substantially change the microstructure of the article.

7. The method of any preceding claim, wherein said heating is a dynamic act and the component temperature is non-uniform;
wherein the article includes at least one defect area (11); and
which further includes machining the at least one defect area (11) to define the weld area (21).

8. The method of claim 1, wherein said heating is within a range from about 316°C (600 ° F) to below the stress relief temperature for the gamma-prime precipitation strengthened alloy;
wherein said heating is accomplished by controlling a scanning laser beam;
wherein said welding is accomplished with the laser beam;
which further includes subjecting the article (10) to a heat treating act after said welding, and wherein the weld (25) is uncompromised by strain age cracking after said heat treating; and
wherein said heating does not substantially change the microstructure of the article,
